# EUROPEAN PATENT APPLICATION

(11) **EP 4 765 395 A1**
(43) Date of publication of application: **24.06.2026**
(21) Application number: 25768680.8
(22) Date of filing: 18.02.2025
(51) Int. Cl.: H01M 50/24, H01M 50/293, H01M 50/291, H01M 50/204

(54) **BATTERY PACK**

(30) Priority: 07.03.2024 KR 20240032639
(71) Applicant: LG Energy Solution, Ltd., Seoul 07335 (KR)
(72) Inventor: KANG, Ho Sung, Daejeon 34122 (KR); LEE, Jae Hyun, Daejeon 34122 (KR); LIM, Chae Won, Daejeon 34122 (KR)
(74) Representative: Plasseraud IP
(86) International application number: PCT/KR2025/099426
(87) International publication number: WO 2025/188125

(57) **Abstract**

Embodiments provide a battery pack. The battery pack includes a pack housing with a base plate and a plurality of battery cell assemblies on the base plate, in which each of the plurality of battery cell assemblies includes a plurality of battery cells arranged in a first direction, a first side beam and a second side beam spaced apart from each other with the plurality of battery cells therebetween, and a first fireproof structure coupled to the first side beam, the first fireproof structure includes a first fire-resistant sheet and a first fire-resistant adhesive layer applied to the first fire-resistant sheet, and the first fire-resistant sheet and the first fire-resistant adhesive layer include different materials.

## Description

### [Technical Field]

The present disclosure relates to a battery pack. The present application claims the benefit of priority based on Korean Patent Application No. 10-2024-0032639, filed on March 7, 2024, and the entire contents of the Korean patent application is incorporated herein by reference.

### [Background Art]

Secondary batteries can be charged and discharged a plurality of times unlike primary batteries. Secondary batteries are widely used as energy sources for various types of wireless devices such as handsets, laptop computers, and cordless vacuum cleaners. Recently, the main use of secondary batteries is moving from mobile devices to mobility, as manufacturing costs per unit capacity of secondary batteries drastically decrease due to improvements in energy density and economies of scale and a range of battery electric vehicles (BEVs) increases to the same level as fuel vehicles.

A trend in the development of technology for secondary batteries for mobility is an improvement in energy density and safety. The safety of secondary batteries for mobility is directly related to passengers' lives and thus is very important. Accordingly, various technologies for delaying heat propagation in a thermal runaway event are being studied.

### [Disclosure]

### [Technical Problem]

The present disclosure is directed to providing a battery pack with improved safety.

### [Technical Solution]

Embodiments of the present disclosure provide a battery pack. The battery pack includes a pack housing with a base plate and a plurality of battery cell assemblies on the base plate, in which each of the plurality of battery cell assemblies includes a plurality of battery cells arranged in a first direction, a first side beam and a second side beam spaced apart from each other with the plurality of battery cells therebetween, and a first fireproof structure coupled to the first side beam, the first fireproof structure includes a first fire-resistant sheet and a first fire-resistant adhesive layer applied to the first fire-resistant sheet, and the first fire-resistant sheet and the first fire-resistant adhesive layer include different materials.

The first fireproof structure may further include a first fire-resistant coating on the first fire-resistant sheet, and the first fire-resistant coating may include a material different from a material of the first fire-resistant sheet.

The first side beam may include a first step structure, the second side beam may include a second step structure, and shapes of the first step structure and the second step structure may be complementary to each other.

The first fireproof structure may be adhered to the first step structure.

The first fireproof structure may have a conformal shape with respect to the first step structure.

Each of the plurality of battery cell assemblies may include a second fireproof structure coupled to the second side beam, and the second fireproof structure may include a second fire-resistant sheet and a second fire-resistant adhesive layer applied to the second fire-resistant sheet.

The second fireproof structure may further include a second fire-resistant coating on the second fire-resistant sheet.

Embodiments provide a battery pack. The battery pack includes a pack housing with a base plate and a plurality of battery cell assemblies on the base plate, in which each of the plurality of battery cell assemblies includes a plurality of battery cells arranged in a first direction, a first side beam and a second side beam spaced apart from each other with the plurality of battery cells therebetween, and a first fire-resistant coating on the first side beam.

Each of the plurality of battery cell assemblies may further include a second fire-resistant coating on the second side beam.

Each of the first and second fire-resistant coatings may have a uniform thickness.

Each of the first and second fire-resistant coatings may include ceramic.

The first side beam may include a first step structure, and the second side beam may include a second step structure.

The first and second side beams may be different from each other and have complementary shapes.

### [Advantageous Effects]

Battery cell assemblies according to embodiments of the present disclosure include fire-resistant coatings applied onto side beams to prevent propagation of a thermal runaway event, thereby improving the safety of a battery pack.

Effects achievable from embodiments of the present disclosure are not limited to the above-described effects, and other effects that are not described herein will be clearly derived and understood by those of ordinary skill in the art to which the embodiments of the present disclosure pertain from the following description. That is, unintended effects achieved when the embodiments of the present disclosure are implemented are derivable by those of ordinary skill in the art from the embodiments of the present disclosure.

### [Brief Description of the Drawings]

FIG. 1 is a plan view for describing a battery pack according to embodiments.
FIG. 2 is a cross-sectional view taken along line 1I-1I' of FIG. 1.
FIG. 3 is a cross-sectional view of a first side beam of FIG. 2.
FIG. 4 is a plan view of the first side beam of FIG. 2.
FIG. 5 is a plan view of a battery pack according to other embodiments.
FIG. 6 is a cross-sectional view taken along line 5I-5I' of FIG. 5.
FIG. 7 is a cross-sectional view of a fireproof structure of FIG. 6.

### [Best Mode]

Hereinafter, embodiments of the present disclosure will be described in detail with reference to the accompanying drawings. Before describing embodiments of the present disclosure, the terms or expressions used in the present specification and claims should not be construed as being limited to as generally understood or as defined in commonly used dictionaries, and should be understood according to meanings and concepts corresponding to the present disclosure on the basis of the principle that the inventor(s) of the application can appropriately define the terms or expressions to optimally explain the present disclosure.

Therefore, embodiments set forth herein and configurations illustrated in the drawings are only examples of the present disclosure and do not reflect all the technical ideas of the present disclosure and thus it should be understood that various equivalents and modifications that replace the configurations would have been made at the filing date of the present application.

Well-known configurations or functions related to describing the present disclosure are not described in detail when it is determined that they would obscure the subject matter of the present disclosure due to unnecessary detail.

Because embodiments of the present disclosure are provided to more fully explain the present disclosure to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

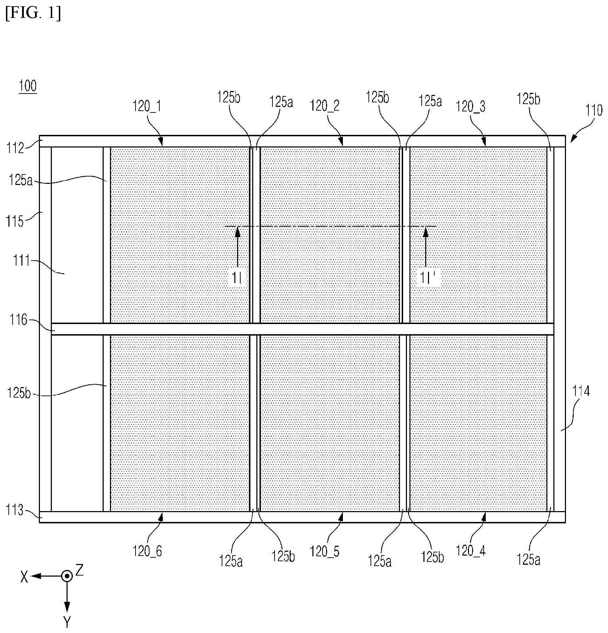

FIG. 1 is a perspective view for describing a battery pack according to embodiments.

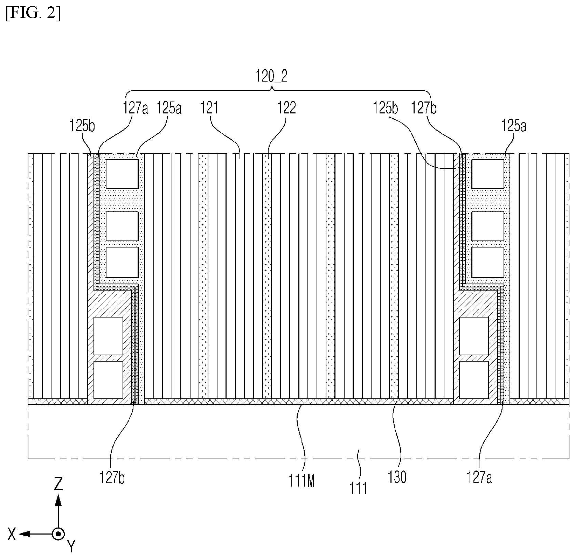

FIG. 2 is a cross-sectional view taken along line 1I-1I' of FIG. 1.

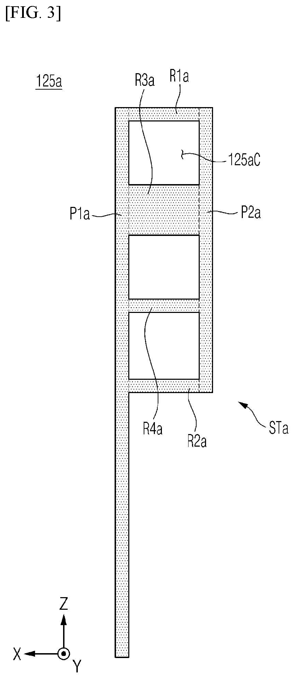

FIG. 3 is a cross-sectional view of a first side beam of FIG. 2.

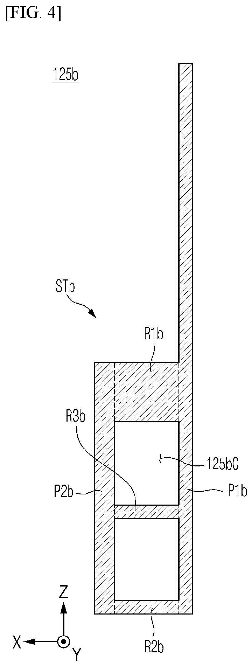

FIG. 4 is a cross-sectional view of a second side beam of FIG. 2.

Referring to FIGS. 1 to 4, a battery pack 100 may include a pack housing 110 and a plurality of battery cell assemblies 120_1, 120_2, 120_3, 120_4, 120_5 and 120_6 (hereinafter, 120_1 to 120_6). The battery pack 100 may be a final product to be mounted in an application such as a vehicle.

The pack housing 110 may provide a space in which the plurality of battery cell assemblies 120_1 to 120_6 are mounted. The pack housing 110 may include a base plate 111 and side walls 112, 113, 114, and 115.

Here, two directions substantially parallel to a mounting surface 111M of the base plate 111 are defined as an X-axis direction and a Y-axis direction, and a direction substantially perpendicular to the mounting surface 111M of the base plate 111 is defined as a Z-axis direction. The X-axis direction, the Y-axis direction, and the Z-axis direction may be substantially perpendicular to one another. The mounting surface 111M may face the plurality of battery cell assemblies 120_1 to 120_6.

Each of the base plate 111 and the side walls 112 and 113 may be provided by an extrusion process. An extrusion direction of each of the base plate 111 and the side walls 112 and 113 may be the X-axis direction. The side walls 114 and 115 may also be provided by the extrusion process. The side walls 112, 113, 114, and 115 may be substantially perpendicular to the base plate 111.

According to embodiments, the base plate 111 and the side walls 112 and 113 may be coupled by friction stir welding. The base plate 111 may include a plurality of unit plates coupled to each other by friction stir welding.

The pack housing 110 may include a center beam 116. The center beam 116 may extend in the X-axis direction. The center beam 116 may be interposed between the side walls 112 and 113. The center beam 116 may be included in a center plate that is one of the plurality of unit plates coupled to each other by friction stir welding. Accordingly, the center beam 116 may be formed together with the center plate and be an element integrally formed with the center plate.

The base plate 111 may include a plurality of cooling channels. The plurality of cooling channels may provide a passage for moving, for example, a refrigerant such as water. The plurality of cooling channels may be formed by the extrusion process. The plurality of cooling channels may extend in the X-axis direction. The plurality of cooling channels may be spaced apart from each other in the Y-axis direction.

The plurality of battery cell assemblies 120_1 to 120_6 may be on the base plate 111 of the pack housing 110. The base plate 111 may support the plurality of battery cell assemblies 120_1 to 120_6. The side walls 112, 113, 114, and 115 may horizontally surround the plurality of battery cell assemblies 120_1 to 120_6.

Hereinafter, the technical idea of the present disclosure will be described with respect to an embodiment in which the battery pack 100 is of a moduleless type and each of the plurality of battery cell assemblies 120_1 to 120_6 does not include a module frame, but the embodiment is only an example and does not limit the technical idea of the present disclosure in any sense. Those of ordinary skill in the art will be able to easily derive an embodiment in which a battery pack is of a module type and each of a plurality of battery cell assemblies includes a module frame, based on the above description.

Each of the plurality of battery assemblies 120_1 to 120_6 may include a plurality of battery cells 121, a plurality of separators 122, a first side beam 125a, a second side beam 125b, a first fire-resistant coating 127a, and a second fire-resistant coating 127b. Each of the plurality of battery assemblies 120_1 to 120_6 may further include an integrated circuit assembly to provide an electrical connection between the plurality of battery cells 121 and monitor the plurality of battery cells 121.

Each of the plurality of battery cells 121 is a basic unit of a lithium ion battery, i.e., a secondary battery. Each of the plurality of battery cells 121 may include an electrode assembly, an electrolyte, and a case. Each of the plurality of battery cells 121 may be a cylindrical battery cell, a prismatic battery cell, or a pouch type battery cell. A case of the cylindrical battery cell may be a cylindrical metal can. A case of the prismatic batteries cell may be a prismatic case. A case of the pouch type battery cell may include an aluminum laminate sheet.

The electrode assembly may include a positive electrode, a negative electrode, and a separator between the positive electrode and the negative electrode. The electrode assembly may be classified as a jelly-roll type electrode assembly or a stack type electrode assembly according to a form of assembly. The jelly-roll type electrode assembly may include a structure in which a positive electrode, a negative electrode, and a separator between the positive and negative electrodes are wound together. A stack type electrode assembly may include a plurality of positive electrodes and a plurality of negative electrodes that are stacked sequentially, and a plurality of separators interposed therebetween.

According to example embodiments, the plurality of battery cells 121 may be connected in series and/or in parallel. Among the plurality of battery cells 121, battery cells 121 that are parallel to each other may form a plurality of banks and each of the plurality of banks may be connected to each other in series.

The plurality of separators 122 may include an elastic material and absorb swelling the plurality of battery cells 121. According to example embodiments, the plurality of separators 122 may be thermal barriers. According to example embodiments, each of the plurality of separators 122 may have a high melting temperature and a low thermal conductivity. According to embodiments, each of the plurality of separators 122 may include a flame-retardant material such as ceramic and a coated glass material. According to example embodiments, the plurality of separators 122 may be configured to emit a fire retarding material and a fire extinguishing agent when a thermal runaway event occurs.

The first side beam 125a and the second side beam 125b may be spaced apart from each other in the X-axis direction with the plurality of battery cells 121 therebetween. The first side beam 125a and the second side beam 125b may horizontally cover the plurality of battery cells 121. The first side beam 125a and the second side beam 125b may be fixed to the plurality of battery cells 121 via an adhesive material or the like.

According to embodiments, the first side beam 125a and the second side beam 125b may be different from each other and have complementary shapes. The first side beam 125a and the second side beam 125b may be meshed with each other. The complementary shapes of the first and second side beams 125a and 125b may be understood as a concept including a clearance therebetween for an assembly margin.

The first side beam 125a may include vertical ribs P1a and P2a and horizontal ribs R1a, R2a, R3a and R4a. The vertical ribs P1a and P2a may be substantially perpendicular to the X-axis direction. The vertical ribs P1a and P2a may be spaced apart from each other in the X-axis direction. The vertical rib P1a may be in contact with one of the plurality of battery cells 121. The vertical rib P2a may be spaced apart from the plurality of battery cells 121 with the vertical rib P1a therebetween. A length of the vertical rib P1a in the Z-axis direction may be greater than a length of the vertical rib P2a in the Z-axis direction. The vertical rib P2a may overlap an upper portion of the vertical rib P1a in the X-axis direction.

The horizontal ribs R1a, R2a, R3a and R4a may be substantially perpendicular to the Z-axis direction. The horizontal ribs R1a, R2a, R3a and R4a may be spaced apart from one another in the Z-axis direction. The horizontal ribs R1a, R2a, R3a and R4a may be interposed between the vertical ribs P1a and P2a. The horizontal ribs R1a, R2a, R3a and R4a may be connected to the vertical ribs P1a and P2a. The horizontal ribs R3a and R4a may be interposed between the horizontal ribs R1a and R2a.

There may be an empty space 125aC between the vertical ribs P1a and P2a and the horizontal ribs R1a, R2a, R3a and R4a. Accordingly, the first side beam 125a may be reduced in weight, and the energy density of the battery pack 100 may be improved.

The first side beam 125a may include a step structure STa. In more detail, a lower portion of the vertical rib P1a, the vertical rib P2a, and the horizontal rib R2a may form the step structure STa. The step structure STa may face outer sides of the plurality of battery cell assemblies 120_1 to 120_6.

The second side beam 125b may include vertical ribs P1b and P2b and horizontal ribs R1b, R2b and R3b. The vertical ribs P1b and P2b may be substantially perpendicular to the X-axis direction. The vertical ribs P1b and P2b may be spaced apart from each other in the X-axis direction. The vertical rib P1b may be in contact with one of the plurality of battery cells 121. The vertical rib P2b may be spaced apart from the plurality of battery cells 121 with the vertical rib P1b therebetween. A length of the vertical rib P1b in the Z-axis direction may be greater than a length of the vertical rib P2b in the Z-axis direction. The vertical rib P2b may overlap a lower portion of the vertical rib P1b in the X-axis direction.

The horizontal ribs R1b, R2b, and R3b may be substantially perpendicular to the Z-axis direction. The horizontal ribs R1b, R2b, and R3b may be spaced apart from one another in the Z-axis direction. The horizontal ribs R1b, R2b, and R3b may be interposed between the vertical ribs P1b and P2b. The horizontal ribs R1b, R2b, and R3b may be connected to the vertical ribs P1b and P2b. The horizontal rib R3b may be interposed between the horizontal ribs R1b and R2b.

There may be an empty space 125bC between the vertical ribs P1b and P2b and the horizontal ribs R1b, R2b and R3b. Accordingly, the second side beam 125b may be reduced in weight, and the energy density of the battery pack 100 may be improved.

The second side beam 125b may include a step structure STb. In more detail, an upper portion of the vertical rib P1b, the vertical rib P2b, and the horizontal rib R2b may form a step structure STb. The step structure STb may face the outsider sides of the plurality of battery cell assemblies 120_1 to 120_6.

A distance between the horizontal rib R3b and the base plate 111 may be greater than a distance between the horizontal rib R2b and the base plate 111. A distance between the horizontal rib R1b and the base plate 111 may be greater than the distance between the horizontal rib R3b and the base plate 111. A distance between the horizontal rib R2a and the base plate 111 may be greater than the distance between the horizontal rib R1b and the base plate 111. A distance between the horizontal rib R4a and the base plate 111 may be greater than the distance between the horizontal rib R2a and the base plate 111. A distance between the horizontal rib R3a and the base plate 111 may be greater than a distance between the horizontal rib R4a and the base plate 111. A distance between the horizontal rib R1a and the base plate 111 may be greater than the distance between the horizontal rib R3a and the base plate 111.

According to embodiments, the second side beam 125b of each of the plurality of battery assemblies 120_1 to 120_6 may be coupled to a first side beam 125a of a subsequent one of the plurality of battery assemblies 120_1 to 120_6. According to embodiments, the second side beam 125b of each of the plurality of battery assemblies 120_1 to 120_6 and the first side beam 125a of the subsequent one of the plurality of battery assemblies 120_1 to 120_6 may be fixed to the base plate 111 via a fixing part such as a bolt
The lower portion of the vertical rib P1a of each of the battery assemblies 120_1 to 120_6 may face the vertical rib P2b of a preceding one of the plurality of battery assemblies 120_1 to 120_6, the upper portion of the vertical rib P1b of each of the plurality of battery assemblies 120_1~120_6 may face the vertical rib P2a of a preceding one of the plurality of battery assemblies 120_1 to 120_6, and the horizontal rib R1b of each of the plurality of battery assemblies 120_1 to 120_6 may face the horizontal rib R2a of a preceding one of the plurality of battery assemblies 120_1 to 120_6.

The battery cell assemblies 120_1, 120_2, and 120_3 may be arranged in the X-axis direction. The second side beam 125b of the battery assembly 120_1 may be coupled to the first side beam 125a of the battery assembly 120_2. The second side beam 125b of the battery assembly 120_2 may be coupled to the first side beam 125a of the battery assembly 120_3. The second side beam 125b of the battery assembly 120_3 may be coupled to a supporting beam on the base plate 111.

The battery cell assemblies 120_4, 120_5, and 120_6 may be arranged in the X-axis direction. The second side beam 125b of the battery assembly 120_4 may be coupled to the first side beam 125a of the battery assembly 120_5. The second side beam 125b of the battery assembly 120_5 may be coupled to the first side beam 125a of the battery assembly 120_6. The second side beam 125b of the battery assembly 120_6 may be coupled to a supporting beam on the base plate 111.

The first fire-resistant coating 127a may be on the first side beam 125a. The second fire-resistant coating 127b may be on the second side beam 125b. Each of the first and second fire-resistant coatings 127a and 127b may include a fire-resistant material.

Each of the first and second fire-resistant coatings 127a and 127b may have a high melting point and/or a high ignition point. According to embodiments, the melting point and/or the ignition point of each of the first and second fire-resistant coatings 127a and 127b may be about 300 °C or higher. According to embodiments, the melting point and/or the ignition point of each of the first and second fire-resistant coatings 127a and 127b may be about 600 °C or higher. According to embodiments, the melting point and/or the ignition point of each of the first and second fire-resistant coatings 127a and 127b may be about 1000 °C or higher. According to embodiments, the melting point and/or the ignition point of each of the first and second fire-resistant coatings 127a and 127b may be about 1500 °C or higher.

Each of the first and second fire-resistant coatings 127a and 127b may have low thermal conductivity. According to embodiments, the thermal conductivity of each of the first and second fire-resistant coatings 127a and 127b may be about 20 W/mK or less. According to embodiments, the thermal conductivity of each of the first and second fire-resistant coatings 127a and 127b may be about 1 W/mK or less. According to embodiments, the thermal conductivity of each of the first and second fire-resistant coatings 127a and 127b may be about 0.3 W/mK or less. The thermal conductivity of each of the first and second fire-resistant coatings 127a and 127b may be measured at room temperature (about 25 °C).

Each of the first and second fire-resistant coatings 127a and 127b may be provided by spraying, printing, vapor deposition, painting, dipping, spin coating, roller coating, floating coating, curtain coating, sputtering, coextrusion, or the like.

According to embodiments, each of the first and second fire-resistant coatings 127a and 127b may have a uniform thickness. Thus, each of the first and second fire-resistant coatings 127a and 127b may have a conformal shape. That is, shapes of the first and second step structures STa and STb may be transferred to the first and second fire-resistant coatings 127a and 127b. According to embodiments, a thickness of each of the first and second fire-resistant coatings 127a and 127b may be in a range of about 10 µm to about 50 µm.

Thermal interface material (TIM) layers 130 may be provided between the base plate 111 of the pack housing 110 and the plurality of battery cell assemblies 120_1 to 120_6. The TIM layers 130 may include a resin composition. The TIM layers 130 may be provided by a thermal resin application process.

The resin composition may be a composition that is curable at room temperature. That is, a curing reaction of the resin composition may start and proceed at room temperature. The curing reaction of the resin composition may be promoted at a temperature higher than room temperature. A curing reaction rate of the resin composition at a temperature higher than room temperature may be higher than a curing reaction rate of the resin composition at room temperature. As a non-limiting example, a major component of the resin composition may be a silicon resin, a polyol resin, an epoxy resin, or an acrylic resin.

The center beam 116 may extend in the X-axis direction. The center beam 116 may isolate the plurality of battery cell assemblies 120_1 to 120_6 in the Y-axis direction. The center beam 116 may be interposed between the plurality of battery cell assemblies 120_1 to 120_6.

In FIG. 1, the plurality of battery cell assemblies 120_1 to 120_6 may be arranged in a 3x2 array. The arrangement of the plurality of battery cell assemblies 120_1 to 120_6 of FIG. 1 is a non-limiting example and should not be understood as limiting the technical idea of the present disclosure in any sense. Those of ordinary skill in the art will be able to easily derive the plurality of battery cell assemblies 120_1 to 120_6 arranged in an MxN array (here, M and N are each an integer of 2 or more), based on the above description.

The battery pack 100 may further include a lid coupled to the side walls 112, 113, 114, and 115 of the pack housing 110. The lid may cover elements, such as the battery cell assemblies 120_1 to 120_6 and electronic components, inside the battery pack 100. The lid may be fixed to the pack housing 110 by a mechanical coupling means such as bolting.

The battery pack 100 may further include exhaust devices coupled to the side walls 114 and 115. One of the side walls 114 and 115 may include exhaust holes connected to the exhaust devices. The exhaust devices may be configured to delay thermal propagation by discharging a high-temperature gas from the inside of the battery pack 100 to the outside when a thermal runaway event occurs in the plurality of battery cell assemblies 120_1 to 120_6.

Here, the thermal runaway event of the plurality of battery cell assemblies 120_1 to 120_6 is a state in which a change of temperature of the plurality of battery cell assemblies 120_1 to 120_6 accelerates the change of temperature, i.e., uncontrollable positive feedback. A temperature of the plurality of battery cell assemblies 120_1 to 120_6 that are in a thermal runaway state sharply increases and a large amount of high-pressure gas and combustion debris are discharged.

Furthermore, each of the battery cell assemblies 120_1 to 120_6 according to embodiments includes the first and second fire-resistant coatings 127a and 127b to prevent the propagation of the thermal runaway event in the X-axis direction, thereby improving the safety of the battery pack 100.

The battery pack 100 may further include a battery management system (BMS). The BMS may be configured to monitor, balance, and control the battery pack 100. The monitoring of the battery pack 100 may include monitoring voltages and currents of certain nodes in the plurality of battery cell assemblies 120_1 to 120_6 and monitoring a distribution of temperatures at set positions in the battery pack 100.

The balancing of the battery pack 100 is an operation of reducing a deviation between the plurality of battery cell assemblies 120_1 to 120_6. The controlling of the battery pack 100 includes preventing overcharging, over-discharging, and overcurrent. Through monitoring, balancing, and controlling, the battery pack 100 may be operated under optimal conditions, thereby preventing the lifespan of each of the plurality of battery cell assemblies 120_1 to 120_6 from being shortened.

The battery pack 100 may further include additional electronic components such as a cooling device, a power relay assembly (PRA), and a safety plug. The cooling device may include a cooling fan. The cooling fan may circulate air in the battery pack 100 to prevent overheating of each of the plurality of battery cell assemblies 120_1 to 120_6. The PRA may be configured to supply or cut off power from a high-voltage battery to an external load (e.g., a motor of a vehicle). The PRA may cut off power supply to an external load (e.g., a motor of a vehicle) to protect the plurality of battery cell assemblies 120_1 to 120_6 and an external load (e.g., a motor of a vehicle), when abnormal voltage such as voltage surges occurs. The additional electronic components may be interposed between the plurality of battery cell assemblies 120_1 to 120_6 and the side wall 115. A space between the battery cell assemblies 120_1 to 120_6 and the side wall 115 may be referred to as an electronic component mounting area.

The battery pack 100 may further include a plurality of inter-bus bars configured to electrically connect the battery cell assemblies 120_1 to 120_6. The battery cell assemblies 120_1 to 120_6 may be connected in series by the plurality of inter-bus bars. Accordingly, the battery pack 100 may be configured to output a high voltage to an external load (e.g., a motor of a vehicle).

### (Second embodiment)

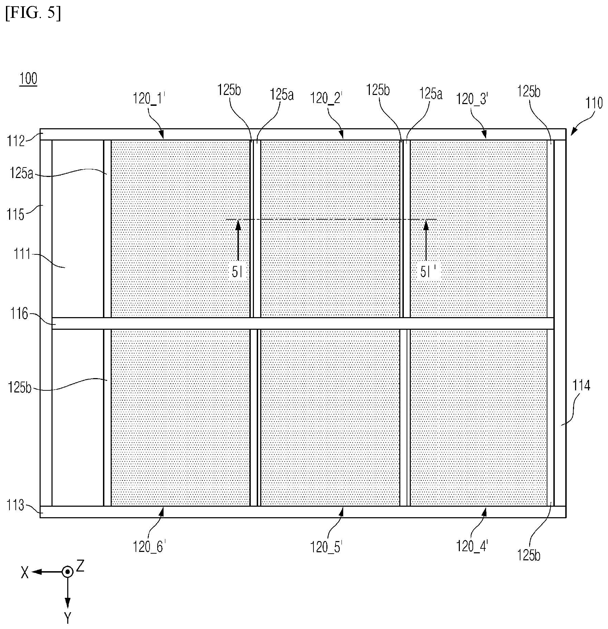

FIG. 5 is a plan view of the battery pack 100' according to embodiments.

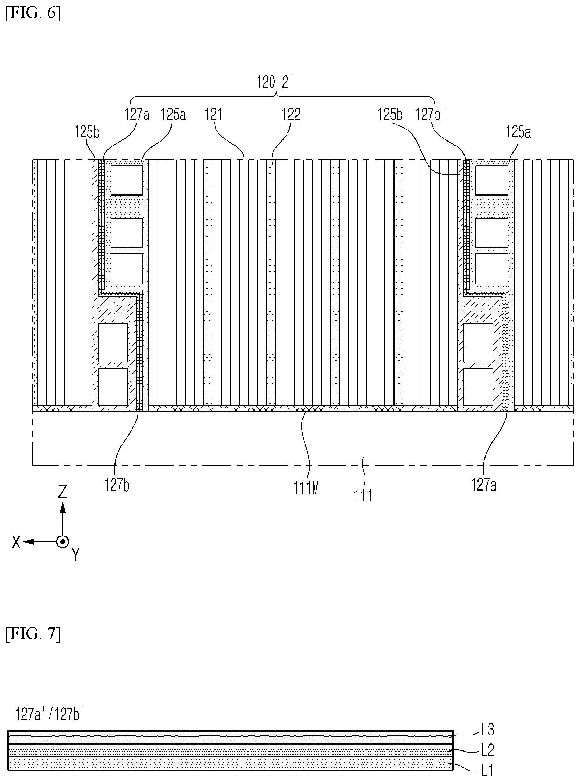

FIG. 6 is a cross-sectional view taken along line 5I-5I' of FIG. 5.

FIG. 7 is a cross-sectional view of fireproof structures 127a' and 127b' of FIG. 6.

Referring to FIGS. 5 to 7, the battery pack 100' may include a pack housing 110 and a plurality of battery cell assemblies 120_1', 120_2', 120_3', 120_4', 120_5' and 120_6' (hereinafter, 120_1' to 120_6'). The battery pack 100' may be a final product to be mounted in an application such as a vehicle.

The pack housing 110 is substantially the same as that described above with reference to FIG. 1. The plurality of battery cell assemblies 120_1' to 120_6' may be substantially the same as the plurality of battery cell assemblies 120_1 to 120_6, except that the plurality of battery cell assemblies 120_1' to 120_6' include first and second fireproof structures 127a' and 127b' instead of the first and second fire-resistant coatings 127a and 127b.

The first fireproof structure 127a' may be on a first side beam 125a. The second refractory structure 127b' may be on a second side beam 125b. Each of the first and second fireproof structures 127a' and 127b' may include a fire-resistant adhesive layer L1, a fire-resistant sheet L2, and a fire-resistant coating L3.

Each of the fire-resistant adhesive layer L1, the fire-resistant sheet L2, and the fire-resistant coating L3 may have a high melting point and/or a high ignition point. According to embodiments, the melting point and/or the ignition point of each of the fire-resistant adhesive layer L1, the fire-resistant sheet L2, and the fire-resistant coating L3 may be about 300 °C or higher. According to embodiments, the melting point and/or the ignition point of each of the fire-resistant adhesive layer L1, the fire-resistant sheet L2, and the fire-resistant coating L3 may be about 600 °C or higher. According to embodiments, the melting point and/or the ignition point of each of of the fire-resistant adhesive layer L1, the fire-resistant sheet L2, and the fire-resistant coating L3 may be about 1000 °C or higher. According to embodiments, the melting point and/or the ignition point of each of the fire-resistant adhesive layer L1, the fire-resistant sheet L2, and the fire-resistant coating L3 may be about 1500 °C or higher.

Each of the fire-resistant adhesive layer L1, the fire-resistant sheet L2, and the fire-resistant coating L3 may have low thermal conductivity. According to embodiments, the thermal conductivity of each of the fire-resistant adhesive layer L1, the fire-resistant sheet L2, and the fire-resistant coating L3 may be about 20 W/mK or less. According to embodiments, the thermal conductivity of each of the fire-resistant adhesive layer L1, the fire-resistant sheet L2, and the fire-resistant coating L3 may be about 1 W/mK or less. According to embodiments, the thermal conductivity of each of the fire-resistant adhesive layer L1, the fire-resistant sheet L2, and the fire-resistant coating L3 may be about 0.3 W/mK or less. The thermal conductivity of each of the fire-resistant adhesive layer L1, the fire-resistant sheet L2, and the fire-resistant coating L3 may be measured at room temperature (about 25 °C).

The fire-resistant adhesive layer L1 may be an adhesive tape having fire resistance properties. The first and second fireproof structures 127a' and 127b' may be adhered to the first and second side beams 125a and 125b via the fire-resistant adhesive layers L1 of the first and second fireproof structures 127a' and 127b'.

The fire-resistant sheet L2 may include a material different from that of the fire-resistant adhesive layer L1. The fire-resistant sheet L2 may include a fire-resistant material. The fire-resistant sheet L2 may include a non-combustible glass (NCG) fiber sheet or a glass-fiber-containing modified polyphenylene oxide (mPPO).

The fire-resistant coating L3 may include a material different from that of the fire-resistant adhesive layer L1. The fire-resistant coating L3 may include a material different from that of the fire-resistant sheet L2. The fire-resistant coating L3 may include ceramic. The fire-resistant coating L3 may be provided by a paint type coating agent. The fire-resistant coating L3 may be provided using a ceramic water-soluble coating agent. The fire-resistant coating L3 may be provided by spraying, painting, printing, vapor deposition, immersion, spin coating, roller coating, floating coating, curtain coating, sputtering, coextrusion, or the like.

The fire-resistant adhesive layer L1 and the fire-resistant coating L3 may be provided with respect to the fire-resistant sheet L2. That is, the fire-resistant adhesive layer L1 and the fire-resistant coating L3 may be provided by performing a tape attachment process and a coating process on the fire-resistant sheet L2. The fire-resistant sheet L2 may be, for example, a substrate for forming the first and second fireproof structures 127a' and 127b'. According to embodiments, the fire-resistant sheet L2 may be a fire-resistant sheet.

According to embodiments, each of the fire-resistant adhesive layer L1, the fire-resistant sheet L2, and the fire-resistant coating L3 may have a uniform thickness. According to embodiments, the thickness of each of the fire-resistant adhesive layer L1, the fire-resistant sheet L2 and the fire-resistant coating L3 may be in a range of about 10 µm to about 50 µm. According to embodiments, the thickness of each of the fire-resistant adhesive layer L1, the fire-resistant sheet L2 and the fire-resistant coating L3 may be in a range of about 50 µm to about 200 µm.

The present disclosure has been described above in more detail with reference to the drawings, the embodiments, etc. However, the configurations illustrated in the drawings or embodiments described in the present specification are only examples of the present disclosure and do not reflect all the technical ideas of the present disclosure and thus it should be understood that various equivalents and modifications that replace the configurations would have been made at the filing date of the present application.

## Claims

1. A battery pack comprising:
a pack housing including a base plate; and
a plurality of battery cell assemblies on the base plate,
wherein each of the plurality of battery cell assemblies includes a plurality of battery cells arranged in a first direction, a first side beam and a second side beam spaced apart from each other with the plurality of battery cells between the first and second side beams, and a first fireproof structure coupled to the first side beam,
the first fireproof structure includes a first fire-resistant sheet and a first fire-resistant adhesive layer applied to the first fire-resistant sheet, and
the first fire-resistant sheet and the first fire-resistant adhesive layer include different materials.

2. The battery pack of claim 1, wherein the first fireproof structure further includes a first fire-resistant coating on the first fire-resistant sheet, and
the first fire-resistant coating includes a material different from a material of the first fire-resistant sheet.

3. The battery pack of claim 1, wherein the first side beam includes a first step structure,
the second side beam includes a second step structure, and
shapes of the first step structure and the second step structure are complementary to each other.

4. The battery pack of claim 3, wherein the first fireproof structure is adhered to the first step structure.

5. The battery pack of claim 4, wherein the first fireproof structure has a conformal shape with respect to the first step structure.

6. The battery pack of claim 1, wherein each of the plurality of battery cell assemblies includes a second fireproof structure coupled to the second side beam, and
the second fireproof structure includes a second fire-resistant sheet and a second fire-resistant adhesive layer applied to the second fire-resistant sheet.

7. The battery pack of claim 6, wherein the second fireproof structure further includes a second fire-resistant coating on the second fire-resistant sheet.

8. A battery pack comprising:
a pack housing including a base plate; and
a plurality of battery cell assemblies on the base plate,
wherein each of the plurality of battery cell assemblies includes a plurality of battery cells arranged in a first direction, a first side beam and a second side beam spaced apart from each other with the plurality of battery cells between the first and second side beams, and a first fire-resistant coating on the first side beam.

9. The battery pack of claim 8, wherein each of the plurality of battery cell assemblies further includes a second fire-resistant coating on the second side beam.

10. The battery pack of claim 9, wherein each of the first and second fire-resistant coatings has a uniform thickness.

11. The battery pack of claim 9, wherein each of the first and second fire-resistant coatings includes ceramic.

12. The battery pack of claim 8, wherein the first side beam includes a first step structure, and
the second side beam includes a second step structure.

13. The battery pack of claim 8, wherein the first and second side beams are different from each other and have complementary shapes.
